(19)

Europäisches
Patentamt
European
Patent Office
Office européen
des brevets

(11)　　**EP 1 492 057 B1**

(12)　　　　　　　　**EUROPEAN PATENT SPECIFICATION**

(45) Date of publication and mention
of the grant of the patent:
**20.10.2010  Bulletin 2010/42**

(51) Int Cl.:
*G07D 5/00* *(2006.01)*　　*B65H 5/06* *(2006.01)*

(21) Application number: **04002792.2**

(22) Date of filing: **09.02.2004**

(54) **Sheet handling apparatus**

Blatt-Transportvorrichtung

Dispositif de manipulation de feuilles de papier

(84) Designated Contracting States:
**DE FR GB**

(30) Priority: **24.06.2003  JP 2003178859**

(43) Date of publication of application:
**29.12.2004  Bulletin 2004/53**

(73) Proprietor: **Hitachi-Omron Terminal Solutions,
Corp.
Tokyo (JP)**

(72) Inventor: **Tamamoto, Junichi
Hitachi, Ltd., IP Group
Chiyoda-ku
Tokyo 100-8220 (JP)**

(74) Representative: **Beetz & Partner
Patentanwälte
Steinsdorfstrasse 10
80538 München (DE)**

(56) References cited:
**EP-A- 0 718 809　　EP-A- 1 199 681
US-A- 4 015 703　　US-A- 5 764 346**

**Description**

Background of the Invention

The present invention relates to an apparatus for handling sheets (for example paper sheets such as paper moneys) in which the sheets as thin mediums are transferred, and an information is obtained from the mediums.
In relation to a sheet transferring device including a prior art information obtaining function, a sheet discrimination device as disclosed by JP-A-2000-259885 exists.
In this prior art, a structure for discriminating a surface condition of the sheet is shown, and a paper money is pressed between rollers at front and back sides of a detecting unit to be transferred.
Further, in JP-A-2000-90318, a method for discriminating the sheet is disclosed, and a coupon ticket, voting card or the like is pressed between the rollers at front and back sides of an image sensor to be transferred.
EP 07-18809A2 discloses a method and an apparatus for characterizing and discriminating bank notes and legal currency. The services of documents are broken down into different characteristic zones for the later detailed analysis of each zone. The apparatus includes an optical system composed of plates between which the document moves, at least one mirror directing the image at a lineal photo sensor, a diaphragm which corrects luminosity and focus, and a meniscus lense. Provided is also a source of infra red illumination and a broad spectrum light source.
US 4015703 discloses a sheet material transport system. It comprises at least two successive groups of free rollers. Each group has a large diameter roller with which two smaller driven rollers provide nips which are angled to another. The entry nip of a following group is angled with respect to the exited nip of a proceeding group such that an item is conveyed through successive nips along a wavy or zig-path. At least one of the two smaller rollers of a group is adjustable to set the entry or exit angle.

Brief Summary of the Invention

An object of the present invention is to provide an apparatus for handling sheets, in which apparatus an information is correctly readable from one of the sheets.
According to the invention, since an apparatus for handling sheets, comprises, a sheet transfer member being movable, and having a transfer surface contactable with one of the sheets so that the one of the sheets is transferred by the sheet transfer member, a sheet supporting surface area being contactable with the one of the sheet transferred by the sheet transfer member, and an information reader arranged to face to the one of the sheet transferred by the sheet transfer member and having in an information reading range including an information reading point (any point in the information reading range, and the information is read from the one of the sheets existing at the information reading point), in which reading range an information is securely readable from the one of the sheets, the information is correctly readable from the one of the sheets supported by the sheet supporting surface area.
If the sheet supporting surface area extends to be contactable with a part of the one of the sheet extending between the transfer surface and the information reading point (so that the information is readable from the one of the sheets supported by the sheet supporting point and the transfer surface, an front end of the one of the sheets transferred by the sheet transfer member is supported by the sheet supporting surface area, and/or the one of the sheets transferred by the sheet transfer member is guided to the information reading range along the sheet supporting surface area), the one of the sheets supported by the sheet supporting surface area is correctly positioned in the information reading range so that the information is securely read from the one of the sheets.
If the sheet supporting surface area extends to guide therealong to the information reading range the one of the sheets transferred by the sheet transfer member, the one of the sheets is securely introduced in the information reading range.
If as seen in a view direction perpendicular to a thickness direction of the one of the sheets and a transferred direction of the one of the sheets transferred by the sheet transfer member (that is, in a direction perpendicular to a surface of the drawings of the present application), a (imaginary) tangential line of a boundary point of the transfer surface of the sheet transfer member from which boundary point the one of the sheets starts to separate away from the transfer surface extends in a side area of an imaginary straight line passing the information reading point and the boundary point, which side area including the sheet supporting surface area (and is prevented from extending the other area of the imaginary straight line, which other area is prevented from including the sheet supporting surface area), the one of the sheets is securely directed toward the sheet supporting surface area.
If the tangential line intersects the sheet supporting surface area as seen in the view direction (between the transfer surface and the information reading point so that at least a part of, particularly the front end of the one of the sheets transferred by the sheet transfer member is directed toward the sheet supporting surface area), the one of the sheets is securely directed toward the sheet supporting surface area to be supported by the sheet supporting surface area.
It is preferable for the the one of the sheets is securely guided toward the sheet supporting surface area that the tangential line is prevented from extending parallel to the imaginary straight line.

If the apparatus further comprises a supplemental sheet transfer member being movable, and having a supplemental transfer surface contactable with the one of the sheets so that the one of the sheets is transferred by the supplemental sheet transfer member, wherein a (imaginary) tangential line of a boundary point of the transfer surface of the sheet transfer member from which boundary point the one of the sheets starts to separate away from the transfer surface of the sheet transfer members intersects with a (imaginary) tangential line of a boundary point of the supplemental transfer surface of the supplemental sheet transfer member from which boundary point the one of the sheets starts to separate away from the supplemental transfer surface of the supplemental sheet transfer member as seen in the view direction, the one of the sheets is securely bent in only one direction parallel to the thickness direction of the one of the sheets so that a positional relationship between the one of the sheets and the information reader is stably kept.

If the apparatus further comprises a supplemental sheet transfer member being movable and having a supplemental transfer surface contactable with the one of the sheets so that the one of the sheets is transferred by the supplemental sheet transfer member, and first and second sheet press members being opposed to the sheet transfer member and supplemental sheet transfer member respectively in such a manner that the one of the sheets is allowed to be pressed between the sheet transfer member and the first sheet press member in a first press direction and between the supplemental sheet transfer member and the second sheet press member in a second press direction, wherein the first and second press directions intersect with each other as seen in the view direction, the one of the sheets is securely bent in only one direction parallel to the thickness direction of the one of the sheets so that a positional relationship between the one of the sheets and the information reader is stably kept.

If the apparatus further comprises a sheet press member being opposed to the sheet transfer member in such a manner that the one of the sheets is allowed to be pressed between the sheet transfer member and the sheet press member at a boundary point in a press direction, wherein an imaginary straight line passing the boundary point in a direction perpendicular to the press direction intersects the sheet supporting surface area as seen in the view direction, at least a part of, particularly the front end of the one of the sheets transferred by the sheet transfer member is directed toward the sheet supporting surface area so that the one of the sheets is supported by the sheet supporting surface area.

If the apparatus further comprises a sheet press member being opposed to the sheet transfer member in such a manner that the one of the sheets is allowed to be pressed between the sheet transfer member and the sheet press member, wherein the sheet press member has a press surface contactable with the one of the sheets so that the one of the sheets is pressed between the press and transfer surfaces, and a compression resistance surface rigidity of one of the press and transfer surfaces is different from that of the other one of the press and transfer surfaces in such a manner that a tangential line of a boundary point of at least one of the press and transfer surfaces from which boundary point the one of the sheets starts to separate away from the at least one of the press and transfer surfaces extends in the side area of the imaginary straight line, the one of the sheets is securely directed toward the sheet supporting surface area.

The sheet transfer member may be a roller rotatable on an rotational axis, and/or a belt rotatable along an annular course.

If the apparatus further comprises a pneumatic blower for applying a pneumatic pressure to the one of the sheets in such a manner that the one of the sheets is urged by the pneumatic pressure toward the sheet supporting surface area, the one of the sheets is securely directed toward the sheet supporting surface area to be supported thereon.

The information reader may have a pair of input points opposed to each other in such a manner that the input points face to respective sides of the one of the sheet in a thickness direction of the one of the sheets to read the information through the input points.

It is preferable for restraining an undesirable jam or crease of the one of the sheets that as seen in the view direction, when the sheet supporting surface area extends straightly in parallel to a support line direction and passes the information reading range, $\alpha$ is an inclination angle between the support line direction and a (imaginary) tangential line of the boundary point of the transfer surface of the sheet transfer member, L is a distance between the boundary point of the transfer surface of the sheet transfer member and the information reading point (any point in the information reading range) in the support line direction, h is a distance between the boundary point of the transfer surface of the sheet transfer member and the sheet supporting surface area in a direction perpendicular to the support line direction, and $\mu$pg is a frictional coefficient between the one of the sheets and the transfer surface of the sheet transfer member, $\tan^{-1}(h/L) < \alpha < \tan^{-1}(1/\mu pg)$.

It is preferable for restraining an undesirable jam or crease of the one of the sheets that as seen in the view direction, when the sheet supporting surface area extends straightly in parallel to a support line direction and passes the information reading range, $\alpha$ is an inclination angle between the support line direction and a (imaginary) tangential line of the boundary point of the transfer surface of the sheet transfer member, L is a distance between the boundary point of the transfer surface of the sheet transfer member and the information reading point (any point in the information reading range) in the support line direction, h is a distance between the boundary point of the transfer surface of the sheet transfer member and the sheet supporting surface area in a direction perpendicular to the support line direction,

$\mu$pg is a frictional coefficient between the one of the sheets and the transfer surface of the sheet transfer member, and J is a distance in the direction perpendicular to the support line direction between the boundary point and an intersecting point between an imaginary line passing the information reading point (any point in the information reading range) and extending perpendicular to the support line direction and an imaginary line passing the boundary point of the transfer surface of the sheet transfer member and extending perpendicular to the tangential line of the boundary point of the transfer surface of the sheet transfer member, $J < (L^2/h)$, and $\alpha < \tan^{-1}(1/\mu pg)$.

If the apparatus further comprises a supplemental sheet supporting surface area opposed to the sheet supporting surface area, contactable with the one of the sheets, and movable with respect to the sheet supporting surface area in such a manner that the one of the sheets contacting the supplemental sheet supporting surface area and transferred by the sheet transfer member is urged in a direction (away from the sheet transfer member and) toward the sheet supporting surface area, the one of the sheets is securely directed toward the sheet supporting surface area to be supported thereon. Further, if the supplemental sheet supporting surface area is opposed to the information reading range (in a thickness direction of the one of the sheets in the information reading range so that the one of the sheets contacting the supplemental sheet supporting surface area and transferred by the sheet transfer member is urged toward the information reading range), the positional relationship between the one of the sheets and the information reader is stably kept.

If the apparatus further comprises a (may be stationary) supplemental sheet supporting surface area being opposed to the sheet supporting surface area and contactable with the one of the sheets, and extending in such a manner that the one of the sheets contacting the supplemental sheet supporting surface area and transferred by the sheet transfer member is guided toward the sheet supporting surface area, the one of the sheets is securely directed toward the sheet supporting surface area to be supported thereon.

The sheet supporting surface area may be curved (so that the tangential line of the boundary point of the supplemental transfer surface of the supplemental sheet transfer member from which boundary point the one of the sheets starts to separate away from the supplemental transfer surface of the supplemental sheet transfer member intersects the sheet supporting surface area, and/or a tangential line of the sheet supporting surface area is prevented from being perpendicular to a direction in which the one of the sheet is pressed against the transfer surface).

If the apparatus further comprises a distance detector arranged to face to the one of the sheets so that a value changing in accordance with a change in distance between the one of the sheets and the information reader is measured by the distance detector, wherein the information reader includes a light emitter for projecting a light to the one of the sheets and a light receiver for receiving the light reflected by the one of the sheets to read the information from the one of the sheets, and the light emitter is controlled in accordance with the value in such a manner that an intensity of the light emitted by the light emitter is increased in accordance with the increase of distance between the one of the sheets and the information reader.

Other objects, features and advantages of the invention will become apparent from the following description of the embodiments of the invention taken in conjunction with the accompanying drawings.

Brief Description of the Several Views of the Drawings

Fig. 1 is a schematic view of an automated teller machine.
Fig. 2 is a schematic view of a discriminating part.
Fig. 3 is a schematic view of a discriminating part.
Fig. 4 is a schematic view of a discriminating part of the invention.
Fig. 5 is a schematic view of a discriminating part of the invention.
Fig. 6 is a schematic view of a discriminating part of the invention.
Fig. 7 is a schematic view of a discriminating part of the invention.
Fig. 8 is a schematic view of a discriminating part of the invention.
Fig. 9 is a schematic view of a discriminating part of the invention.
Fig. 10 is a schematic view of a discriminating part of the invention.
Fig. 11 is a schematic view of a discriminating part of the invention.
Fig. 12 is a schematic view of a discriminating part of the invention.
Fig. 13 is a schematic cross sectional view showing another embodiment of the invention.

Detailed Description of the Invention

An embodiment of the invention applied to an automated teller machine (ATM) is described below.

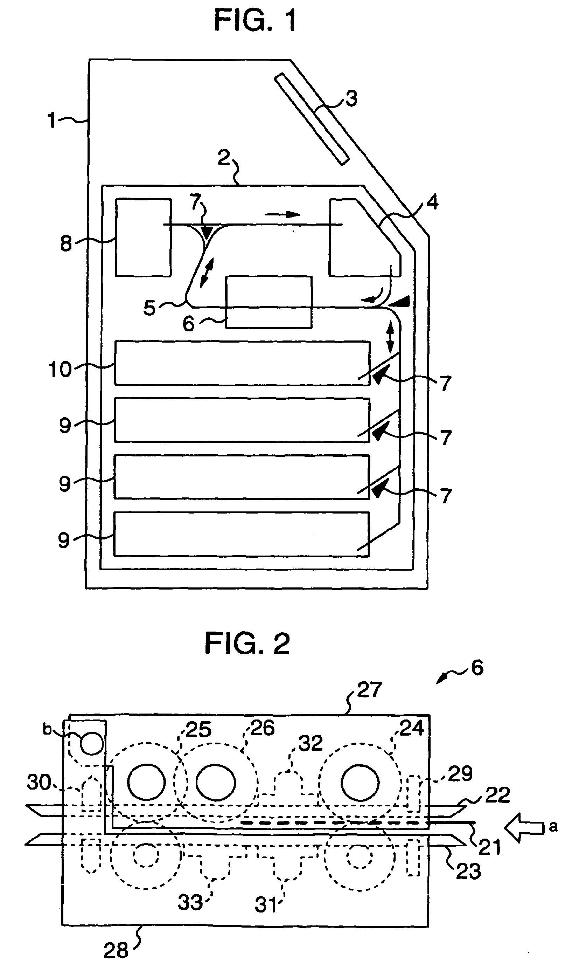

Fig. 1 is a schematic view showing an example of an automated teller machine (ATM) 1 of the invention.
In Fig. 1, the ATM has a plurality of modules, and a paper money handling device 2 and an input and output device 3 are shown in Fig. 1. The paper money handling device 2 performs a treatment of handling paper moneys, for example, receiving and disbursing the paper money. Detailed structure and operation thereof will be described below. The input and output device 3 is, for example, a combination of a monitor and push-buttons, or a touch panel in which the monitor and push-buttons are combined. By the input and output device 3, an operator of the ATM 1 inputs selected one of receiving and disbursing the money, or an operating sequence is indicated to an operator of the ATM 1. In addition, it may have a module for handling a card, a module for handling a passbook or a module for handling coins.

When the paper money is received, the operator selects a receiving money treatment on the input and output device 3. A shutter of a money receiving and disbursing port 4 is opened so that a bundle of the paper moneys is taken in. The receiving and disbursing money port 4 draws out the paper moneys one by one with a drawing roller including a rubber periphery to be transferred to a transfer passage 5. The transfer passage 5 has, for example, a belt or roller to clamp the paper money so that the paper money is transferred by a movement or rotation of the belt or roller. An optical or magnetic characteristic of the transferred paper money is measured by a checking device 6 to determine whether or not the paper money is counterfeit.

The paper money which was deemed to be counterfeit or broken so that the paper money is not appropriate for being used, is returned to the by switching a gate 7.

On the other hand, the paper money which was deemed to be appropriate for being used, is contained temporarily in a temporary storage portion 8. After a confirmation of amount of money is performed between the operator and the input and output device 3, the paper money is drawn out of the temporary storage portion 8 to be transferred to a storage portion 9 through the transfer passage 5. When a plurality of the storage portions 9 are arranged, the storage portions 9 contain, for example, respective kinds of the paper moneys by switching the gate 7.

When the paper money is disbursed, the operator selects disbursing the money on the input and output device 3. The storage portion 9 draws out an ordered number of the paper moneys to be transferred to the transfer passage 5. If the paper money is deemed to be inappropriate for being disbursed when the paper money passes the checking device 6, the paper money is contained in the temporary storage portion 8 by switching the gate 7. Appropriate one of the paper moneys is received by the receiving and disbursing money port 4. After containing a predetermined number of the paper moneys, the shutter of the receiving and disbursing money port 4 is opened to be taken out by the operator. The inappropriate one B of the paper moneys is drawn out of the temporary storage portion 8 to be contained in a reject storage portion 10.

The ATM 1 performs receiving and disbursing the money along the above operations. In this ATM 1, the present invention is applicable to the checking device 6 for obtaining an information of the paper money such as an optical image or magnetic pattern thereof.

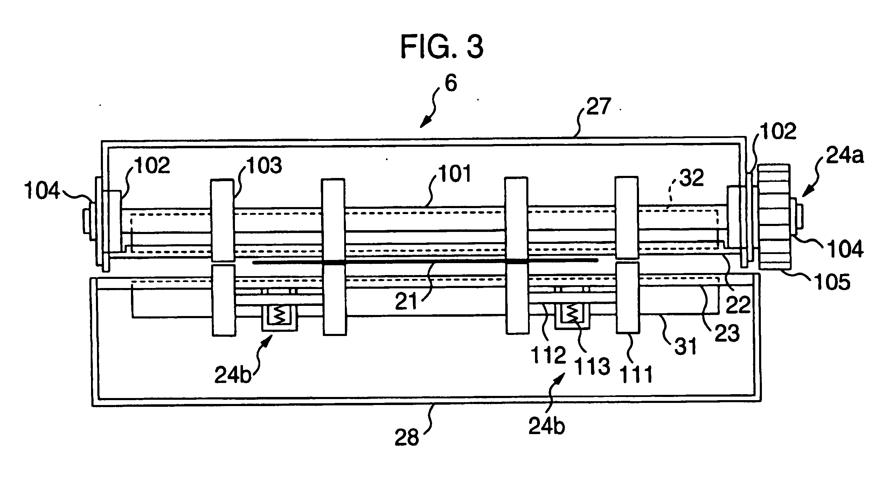

Figs. 2 and 3 shows a structure of the checking device 6. Fig. 2 shows the structure as seen in a side of a paper money transferring direction, and Fig. 3 shows the structure as seen in a direction of arrow a of the paper money transferring direction.

In Figs. 2 and 3, a paper money 21 is transferred in a transfer clearance between first and second guide device 22 and 23 by first and second transfer device 24 and 25. A movable guide device 26 (whose outer peripheral surface is as the claimed supplemental sheet supporting surface area) projects into the transfer clearance to transfer the paper money 21 and guide the paper money 21 in a predetermined direction.

The first and second guide device 22 and 23 are formed by, for example, a sheet of metal or resin, and fixed with a predetermined distance therebetween.

The first and second transfer device 24 and 25 are, for example, a pair of rollers pressed against each other. Concrete structure thereof is shown in Fig. 3. The first transfer device 24 has a drive roller 24a and a driven roller 24b. The drive roller has a shaft 101, a bearing 102 for supporting the shaft 101 in a rotatable manner, a rubber roller 103, a stop ring 104 for fixing the shaft axially, and a gear 103 for transmitting a drive force. The driven roller 24b has a bearing 111 with an outer ring used for transfer, a shaft 112 for supporting the bearing 111, and a spring 113 with an end fixed to the second guide device 23 to urge the shaft 112.

The drive roller 24a is rotated by the drive force of a motor (not shown) through the gear 105. The driven roller 24b is pressed against the drive roller 24a by the spring 113. Therefore, the paper money 21 is clamped between the drive and driven rollers 24a and 24b to be driven by the drive force applied from the rubber roller 103.

The movable guide device 26 has the same structure as the drive roller 24a of the first drive device, and is arranged with a clearance or contact with respect to the second guide device opposed to it. The roller of the movable guide device 26 is rotated to generate the drive force in the transfer direction. Therefore, a clearance between the movable guide device 26 and the second guide device 23 may be smaller than a clearance between the first and second guide device 22 and 23 so that the paper money can approach close an information obtaining device 33.

First and second casings 27 and 28 support the first and second guide device 22 and 23, first and second transfer device 24 and 25 and the movable guide device 26 to form an outer periphery of the checking device 6. The first and second casings 27 and 28 are supported in a rotatable manner on a fulcrum b so that the transfer clearance can be opened for maintenance.

First and second pass detecting device 29 and 30 are respective pairs of photodiodes and phototransistors so that the paper money moving into the checking device 6 is detected on intercept of an optical beam axis by the paper money.

First, second and third information obtaining device 31, 32 and 33 are arranged close to the transfer clearance to obtain the optical or magnetic information of the paper money 21. The first and second information obtaining device 31 and 32 are, for example, optical information obtaining device in which a light emitter of light emitting diode irradiates the paper money and a reflection thereof is detected by an optical receiver to obtain an image of the paper money 21. By the first and second information obtaining device 31 and 32 opposed to each other through the transfer clearance, optical images of both sides of the paper money are obtainable simultaneously.

The third information obtaining device 33 is, for example, a magnetic information obtaining device in which a pattern of magnetic field magnitude of the paper money is obtainable.

In the ATM 1, since the paper money as valuable resource is handled, a significantly high reliability on detecting a kind of the paper money and checking a bad paper is required. Therefore, in the checking device 6, the information of the paper money needs to be obtained correctly.

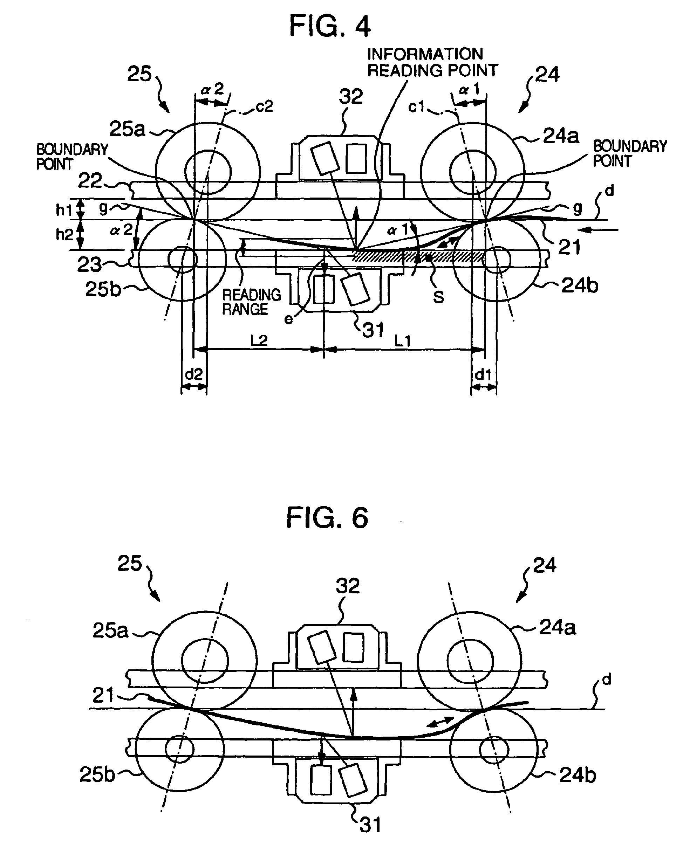

In order to keep a distance between the information obtaining device and the paper money constant, a structure as shown in Fig. 4 is used.

Fig. 4 is a view showing a transfer passage structure of the checking device 6 including an embodiment of the invention.

In Fig. 4, clamping direction lines c1 and c2 are inclined by respective inclination angles $\alpha1$ and $\alpha2$ so that the inclination angles are inversed with respect to each other as seen from a side. Therefore, the paper sheet or the like 21 is transferred toward the second guide means 23. When the angle $\alpha1$ is not less than a predetermined angle, the paper money 21 reaches the second guide device 23 before reaching the first information obtaining device 31 in a region S (as the claimed sheet supporting surface area) of the second guide device 23 between the first transfer device 24 and the first information obtaining device 31. Therefore, the distance between the information obtaining device 31 and the paper money 21 can be kept constant.

That is, when a distance between the second information obtaining device 32 and each of the drive rollers 24a and 25a is smaller than a distance between the first information obtaining device 31 and corresponding one of the driven rollers 24b and 25b, the paper money 21 is transferred along the second guide device 23 at a side of the first information obtaining device 31.

Alternatively, when a distance between the first information obtaining device 31 and each of the driven rollers 24b and 25b is smaller than a distance between the second information obtaining device 32 and corresponding one of the drive rollers 24a and 25a, the paper money 21 is transferred along the first guide device 22 at a side of the second information obtaining device 32.

When a transfer face d is substantially straight as shown in Fig. 4, the predetermined angle of the angle $\alpha$ is obtained from the following formula with L being a distance between a clamping point of the transfer device and a detecting position of the information obtaining device in a transfer direction, and h being a distance between the clamping point of the transfer device and the guide device at the detecting position of the information obtaining device in a direction perpendicular to the transfer direction,

$$\alpha \geq \tan^{-1} (h/L). \quad \text{(formula 1)}$$

In Fig. 4, the angle $\alpha1$ is represented by a formula 2. Incidentally, L1 is a distance between the clamping point of the first transfer device 24 and the detecting point of the first information obtaining device 31 in the transfer direction, and h2 is a distance between the clamping point of the first transfer device 24 and the second guide device 23 at the detecting position of the first information obtaining device 31 in the direction perpendicular to the transfer direction,

$$\alpha1 \geq \tan^{-1} (h2/L1). \quad \text{(formula 2)}$$

Similarly, the angle $\alpha2$ is represented by a formula 3. Incidentally, L2 is a distance between the clamping point of the second transfer device 24 and the detecting position of the first information obtaining device 31 in the transfer direction,

$$\alpha2 \geq \tan^{-1} (h2/L2). \quad \text{(formula 3)}$$

If the angle $\alpha$ is excessively great, a frictional force between the paper sheet or the like 21 and the second guide device 23 becomes great so that a transfer trouble such as jam can occur. Therefore, when a frictional coefficient between the paper sheet or the like 21 and the second guide device 23 is$\mu$pg, the angle $\alpha$ is set in a range of

$$\alpha < \tan^{-1}(1 / \mu pg). \quad \text{(formula 4)}$$

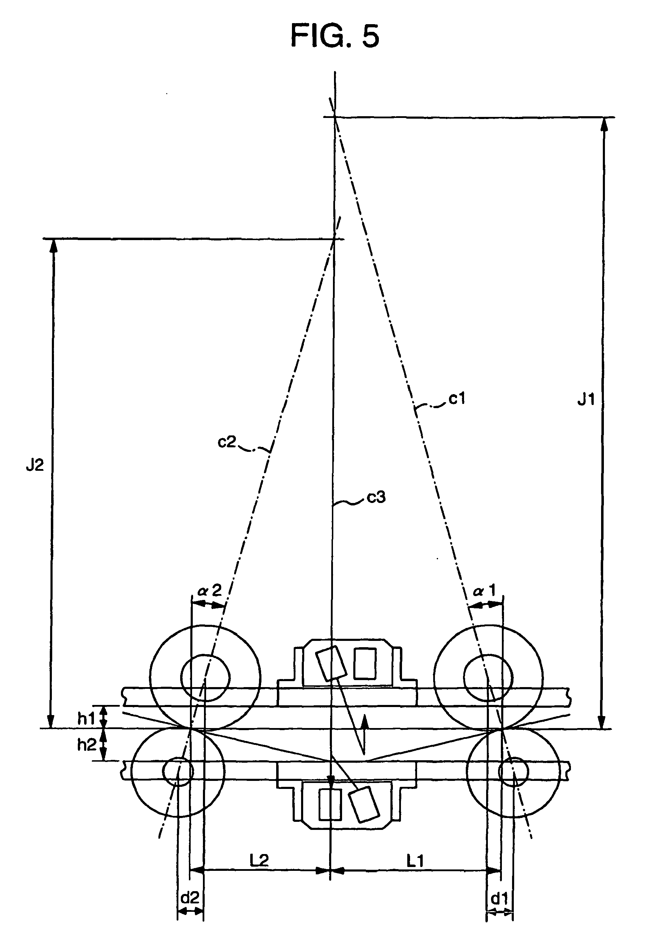

Further, as shown in Fig. 5, a line c3 passing the information obtaining position of the first information obtaining device 31 perpendicular to the transfer face d may intersects the clamping direction line c1 or c2.
A distance J between the transfer face d and the intersecting point is represented by

$$J < ( L^2 / h ). \quad \text{(formula 5)}$$

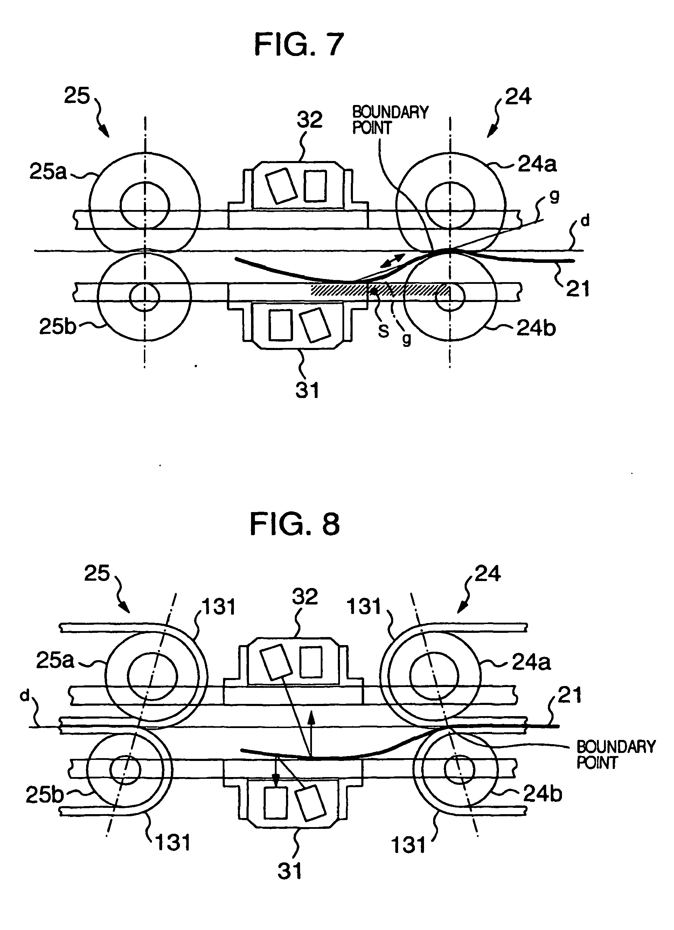

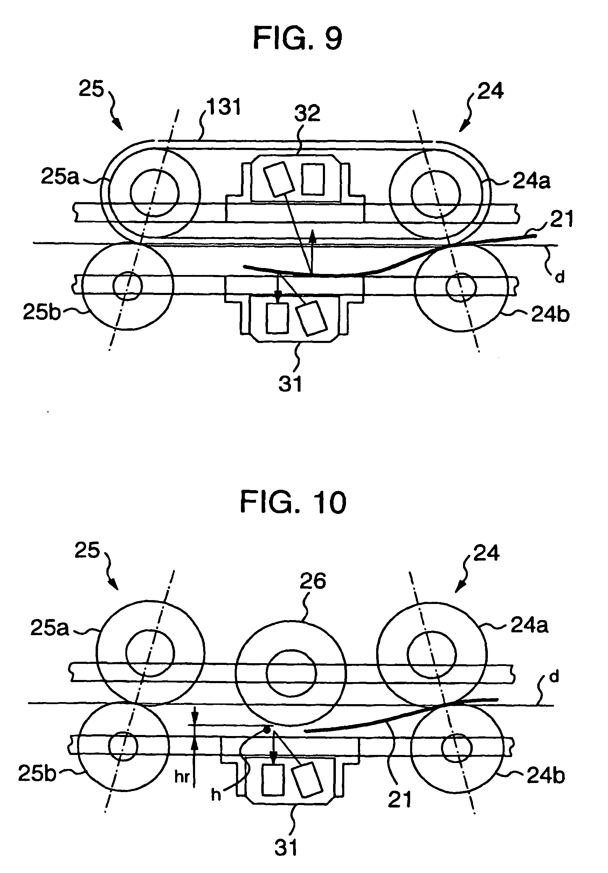

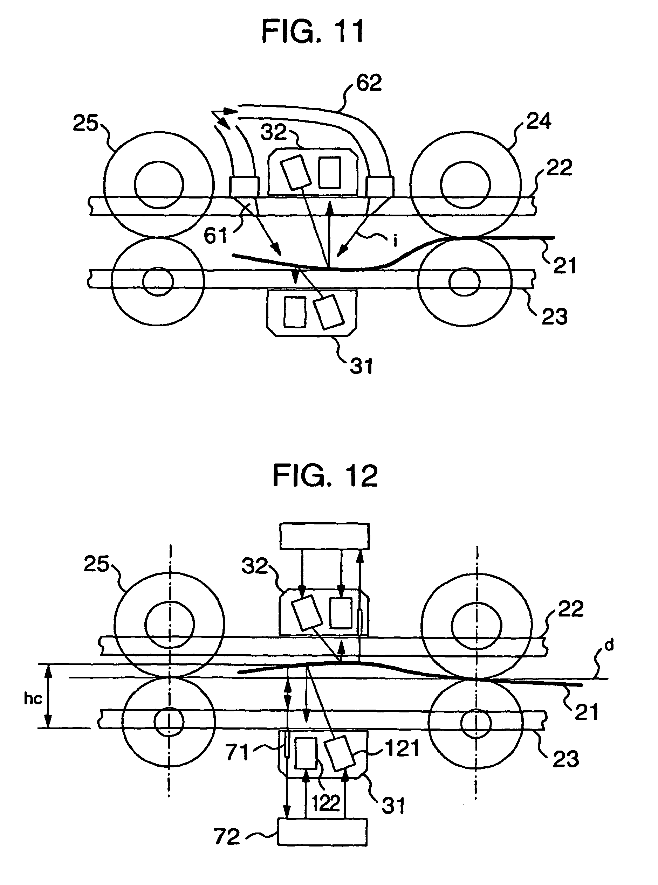

When the angle $\alpha$ is excessively great, the transfer trouble can occur as stated above, therefore, it should be limited in a range represented by the formula 4.
Incidentally, it is important for the clamping line c2 of the second transfer device 25 to be inclined, because as shown in Fig. 6, after the transferred paper money 21 is clamped by the second transfer device 25, a force pressing the paper money 21 against the first information obtaining device 31 is generated.
Further, although the clamping line c is inclined in the above embodiments, an embodiment as shown in Fig. 7 may be used.
In Fig. 7, one of the rollers of each of the first and second transfer device 24 and 25 is softened in comparison with the other one thereof so that a transfer direction line g (as the claimed tangential line of the boundary point of the transfer surface of the sheet transfer member from which boundary point the one of the sheets starts to separate away from the transfer surface) of the paper sheet or the like is directed to the region S.
Further, although the first and second transfer device 24 and 25 has respective pairs of the rollers in the above embodiments, the paper money 21 may be transferred by belts 131 as shown in Figs. 8 and 9. In these arrangement, the angles $\alpha$1 and $\alpha$2 of the clamping direction lines c1 and c2 of the first and second transfer device 24 and 25 at a position closes to the first information obtaining device 31 have relationships represented by the above formula 1.
As described above, by inclining the clamping direction lines at both sides close to the information obtaining device from the direction perpendicular to the transfer direction to be inversed with respect to each other, the paper money is pressed against one of the guide device to keep the distance between the information obtaining device and the paper money constant.
Incidentally, when the first and second guide device 22 and 23 are formed of a high resistance material such as plastics, a contact with the paper money generates a static electricity. Therefore, dust is attracted by the static electricity to have an adverse affect on obtaining the information.
Therefore, the first and second guide device 22 and 23 are preferably formed of a relatively low volume resistivity (not more than $10^{12}$ $\Omega$m) and optically transparent material.
Further, since a cost increases when the whole of the first and second guide device 22 and 23 is formed of such material, a guide member 123 of the relatively low volume resistivity (not more than $10^{12}$ $\Omega$m) and optical transparence is preferably arranged at the detecting positions of the first and second information obtaining device 31 and 32, and an electrically grounded electrically conductive member 124 preferably contacts it, as shown in Fig. 4.
Therefore, the dust is prevented from being attracted to the detecting position.
Further, these structures may be applied to a case in which a movable guide device 26 is used as shown in Fig. 10, so that a good effect is obtained. When the information obtaining device such as a magnetic information obtaining device or an information obtaining device for obtaining an optical information on only one side is arranged at one side of the transfer clearance, the movable guide device 26 is arranged to be opposed to the information obtaining device.
As stated above, the clamping direction lines is inclined to transfer the paper money 21 at a position close to the third information obtaining device 33, and to introduce smoothly the paper money 21 to a clearance h between the movable guide device 26 and the second information obtaining device 23.
Further, even when the paper money 21 has an excessive crease so that the paper money 21 generates a force to be separated from the second guide device 23, the movable guide device 26 keeps the paper money 21 within a distance tr from the second guide device.
Therefore, a distance between the information obtaining device and the paper money can be kept constant.
Further, as a structure having the similar effect, an air flow device as shown in Fig. 11 is usable.
A nozzle 61 (as the claimed pneumatic blower) is arranged on the first guide device 22 opposed to the first information obtaining device 31, and an air is supplied thereto through a supply tube 62 by a blower not shown, so that the air buffets the paper money 21 as an arrow i. Therefore, the transferred paper money 21 is pressed against the second guide device 22 to keep the distance between the paper money 21 and the first or second information obtaining device 31 or 32 constant.

As shown in Fig. 12, a distance hc between the paper money 21 and the first or second information obtaining device 31 or 32 may be measured to control a light emitter element 121 and a light receiver element 122 as the claimed information reader.

In Fig. 12, a distance measuring device 71 in which the distance is measured from a reflection time period of ultrasonic wave or by a triangular surveying of positions irradiated by laser measures the distance hc from the paper money 21.

A control device 72 receives the distance hc from the distance measuring device 71 to control the light emitter element 121 and the light receiver element 122.

A light projected by the light emitter element 121 has a highest brightness at an light beam axis center, and a brightness decreasing from the center toward an outside. When a standard is set in a case that the paper money passes on the transfer surface d, the brightness at a coverage part of the paper money 21 detected by the light receiver element 122 decreases in accordance with an increase in distance from the transfer surface d.

In a control, an electric current into the light emitter element 121 is adjusted in accordance with the distance hc to change a light intensity. A predetermined relationship between the distance hc and the electric current is incorporated preliminarily in the control device 72. Therefore, the brightness on the coverage part of the paper money 21 is kept constant so that the brightness does not change over the paper money 21.

By the above mentioned structures, the distance between the paper money and the information obtaining device is kept constant to obtain correctly the information so that a significantly high reliability on detecting a kind of the paper money and checking a bad paper can be performed.

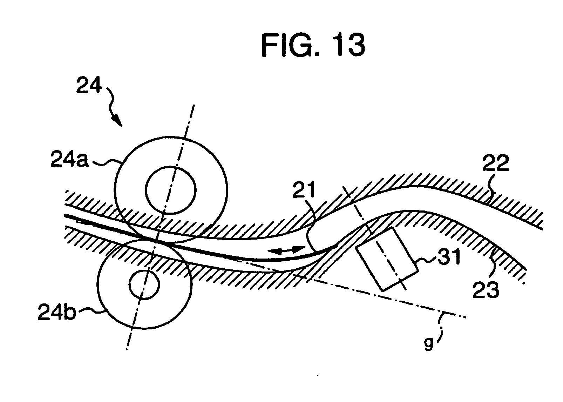

As shown in Fig. 13, at least one of the first and second guide device 22 and 23 may be curved in such a manner that the paper sheet or the like 21 is smoothly guided to the detecting position and the transfer direction line g (tangential line of the boundary point of the transfer surface of at least one of the rollers 24a and 24b from which boundary point the paper sheet or the like 21 starts to separate away from the transfer surface) intersects the surface of the at least one of the first and second guide device 22 and 23 between the at least one of the first and second guide device 22 and 23 and the information obtaining device 31.

According to the invention, the distance between the paper money and the information obtaining device is kept constant to obtain correctly the information, so that a transfer device for paper sheet or the like with the high reliability on detecting the kind of the paper money and checking the bad paper can be provided.

## Claims

1.   An apparatus for handling sheets (21), comprising first and second sheet transfer members (24a, 24b, 25a, 25b, 131) being rotatable, and having a transfer surface contactable with a sheet to be transferred so that said sheet (21) is transferred by the sheet transfer members, a guide device (23) disposed between the first and second sheet transfer members (24a, 24b, 25a, 25b) and having a sheet supporting surface area (S) and being contactable by a sheet transferred by one (24a, 24b) of the sheet transfer members, and
an information reader (122) arranged between the first and second sheet transfer members (24a, 24b, 25a, 25b) to face the sheet transferred by the one sheet transfer member (24a, 24b) and having an information reading range including an information reading point, in which reading range an information is securely readable from the one of the sheets,
**characterized in that**
the sheet supporting surface area (S) extends to be contactable with the one of the sheet between the first sheet transfer member (24a, 24b) and the information reading point,
said one sheet transfer member (24a, 24b) is arranged to transfer the sheet towards the sheet supporting surface area (S) of the guide device (23) such that the sheet reaches the sheet supporting surface area (S) upstream of the information reader (122), and
when seen in a direction perpendicular to the thickness direction of the sheet and perpendicular to the transfer direction of the sheets, a tangential line (g) at a boundary point of the transfer surface of the first sheet transfer member (24) from which boundary point the sheets starts to separate away from the transfer surface extends towards a side area of an imaginary straight line passing the information reading point and the boundary point, said side area including the sheet supporting surface area.

2.   An apparatus according to claim 1, wherein the sheet supporting surface area extends to guide therealong into the information reading range the one of the sheets transferred by the sheet transfer member.

3. An apparatus according to claim 1, wherein the tangential line (g) intersects the sheet supporting surface area as seen in the view direction.

4. An apparatus according to claim 1, wherein the tangential line (.g) is prevented from extending parallel to the imaginary straight line.

5. An apparatus according to any one of claims 1-4, further comprising a supplemental sheet transfer member being movable, and having a supplemental transfer surface contactable with the one of the sheets so that the one of the sheets is transferred by the supplemental sheet transfer member, wherein a tangential line of a boundary point of the transfer surface of the sheet transfer member from which boundary point the one of the sheets starts to separate away from the transfer surface of the sheet transfer members intersects with a tangential line of a boundary point of the supplemental transfer surface of the supplemental sheet transfer member from which boundary point the one of the sheets starts to separate away from the supplemental transfer surface of the supplemental sheet transfer member as seen in a view direction perpendicular to a thickness direction of the one of the sheets and a transferred direction of the one of the sheets transferred by the sheet transfer member.

6. An apparatus according to any one of claims 1-4, further comprising a supplemental sheet transfer member being movable and having a supplemental transfer surface contactable with the one of the sheets so that the one of the sheets is transferred by the supplemental sheet transfer member, and first and second sheet press members being opposed to the sheet transfer member and supplemental sheet transfer member respectively in such a manner that the one of the sheets is allowed to be pressed between the sheet transfer member and the first sheet press member in a first press direction and between the supplemental sheet transfer member and the second sheet press member in a second press direction, wherein the first and second press directions intersect with each other as seen in a view direction perpendicular to a thickness direction of the one of the sheets and a transferred direction of the one of the sheets transferred by the sheet transfer member.

7. An apparatus according to any one of claims 1-4, further comprising a sheet press member being opposed to the sheet transfer member in such a manner that the one of the sheets is allowed to be pressed between the sheet transfer member and the sheet press member at a boundary point in a press direction, wherein an imaginary straight line passing the boundary point in a direction perpendicular to the press direction intersects the sheet supporting surface area as seen in a view direction perpendicular to a thickness direction of the one of the sheets and a transferred direction of the one of the sheet transferred by the sheet transfer member.

8. An apparatus according to any one of claims 1-4, further comprising a sheet press member (24a, 24b, 25a, 25b, 131) being opposed to the sheet transfer member in such a manner that the one of the sheets is allowed to be pressed between the sheet transfer member and the sheet press member, wherein the sheet press member has a press surface contactable with the one of the sheets so that the one of the sheets is allowed to be pressed between the press and transfer surfaces, and a compression resistance surface rigidity of one of the press and transfer surfaces is different from that of the other one of the press and transfer surfaces in such a manner that a tangential line of a boundary point of at least one of the press and transfer surfaces from which boundary point the one of the sheets starts to separate away from the at least one of the press and transfer surfaces extends in the side area of the imaginary straight line.

9. An apparatus according to any one of claims 1-8, wherein the sheet transfer member is a roller (24a, 24b, 25a, 25b) rotatable an an rotational axis.

10. An apparatus according to any one of claims 1-8, wherein the sheet transfer member is a belt (131) rotatable along an annular course.

11. An apparatus according to any one of claims 1-10, further comprising a pneumatic blower (61) for applying a pneumatic pressure to the one of the sheets in such a manner that the one of the sheets is urged by the pneumatic pressure toward the sheet supporting surface area.

12. An apparatus according to any one of claims 1-11, wherein the information reader has a pair of input points (122) opposed to each other in such a manner that the input points face to respective sides of the one of the sheet in a thickness direction of the one of the sheets to read the information through the input points.

**13.** An apparatus according to any one of claims 1-12, wherein as seen in a view direction perpendicular to a thickness direction of the one of the sheets and a transferred direction of the one of the sheets transferred by the sheet transfer member, when the sheet supporting surface area extends straightly in parallel to a support line direction and passes the information reading range, $\alpha$ is an inclination angle between the support line direction and a tangential line (g) of a boundary point of the transfer surface of the sheet transfer member from which boundary point the one of the sheets starts to separate away from the transfer surface, L is a distance between the boundary point of the transfer surface of the sheet transfer member and the information reading point in the support.line direction, h is a distance between the boundary point of the transfer surface of the sheet transfer member and the sheet supporting surface area in a direction perpendicular to the support line direction, and $\mu$pg is a frictional coefficient between the one of the sheets and the transfer surface of the sheet transfer member, $\tan^{-1}(h/L) < \alpha < \tan^{-1}(l/\mu pg)$.

**14.** An apparatus according to any one of claims 1-12, wherein as seen in a view direction perpendicular to a thickness direction of the one of the sheets and a transferred direction of the one of the sheets transferred by the sheet transfer member, when the sheet supporting surface area extends straightly in parallel to a support line direction and Passes the information reading range, $\alpha$ is an inclination angle between the support line direction and a tangential line (g) of a boundary point of the transfer surface of the sheet transfer member from which boundary point the one of the sheets starts to separate away from the transfer surface, L is a distance between the boundary point of the transfer surface of the sheet transfer member and the information reading point in the support line direction, h is a distance between the boundary point of the transfer surface of the sheet transfer member and the sheet supporting surface area in a direction, perpendicular to the support line direction, $\mu$pg is a frictional coefficient between the one of the sheets and the transfer surface of the sheet transfer member, and J is a distance in the direction perpendicular to the support line direction between the boundary point and an .intersecting point between an imaginary line passing the information reading point and extending perpendicular to the support line direction and an imaginary line passing the boundary point Of the transfer surface of the sheet transfer member and extending perpendicular to the tangential line of the boundary point of the transfer surface of the sheet transfer member, $J < (L^2/h)$, and $\alpha < \tan^{-1}(1/\mu Pg)$.

**15.** An apparatus according to any one of claims 1-14, further comprising a supplemental sheet supporting surface area (26) opposed to the sheet'supporting surface area, contactable with the one of the sheets, and movable with respect to the sheet supporting surface area in such a manner that the one of the sheets contacting the supplemental sheet supporting surface area and transferred by the sheet transfer member is urged in a direction toward the sheet supporting surface area.

**16.** An apparatus according to claim 15, wherein the supplemental sheet supporting surface area (26) is opposed to the information reading range so that the one of the sheets contacting the supplemental sheet supporting surface area and transferred by the sheet transfer member is urged in a direction toward the information reading range.

**17.** An apparatus according to any one of claims 1-15, further comprising a supplemental sheet supporting surface area (26) being opposed to the sheet supporting surface area and contactable with the one of the sheets, and extending in such a manner that the one of the sheets contacting the supplemental sheet supporting surface area and transferred by the sheet transfer member is guided toward the sheet supporting surface area.

**18.** An apparatus according to any one of claims 1-12 and 15-17, wherein the sheet supporting surface area is curved.

**19.** An apparatus according to any one of claims 1-18, further comprising a distance detector (71) arranged to face to the one of the sheets so that a value changing in accordance with a change in distance between the one of the sheets and the information reader is measured by the distance detector, wherein the information reader includes a light emitter (121) for projecting a light to the one of the sheets and a light receiver (122) for receiving the light reflected by the one of the sheets to read the information from the one of the sheets, and the light emitter is controlled in accordance with the value in such a manner that an intensity of the light emitted by the light emitter is increased in accordance with the increase of distance between the one of the sheets and the information reader.

**Patentansprüche**

**1.** Vorrichtung zur Beförderung von Blättern (21), mit ersten und zweiten Blatttransportelementen (24a, 24b, 25a, 25b, 31), die drehbar sind und eine Transportfläche aufweisen, die mit einem zu transportierenden Blatt in Kontakt bringbar ist, so dass das Blatt (21) durch die Blatttransportelemente transportiert wird, einer Führungsvorrichtung (23), die zwischen dem ersten und zweiten Blatttransportelement (24a, 24b, 25a, 25b) angeordnet ist und einen Blattstützflächenbereich (S) aufweist und von einem Blatt kontaktiert werden kann, das von einem (24a, 24b) der Blatttransportelemente transportiert worden ist, und

einem Informationslesegerät (122), das zwischen dem ersten und zweiten Blatttransportelement (24a, 24b, 25a, 25b) angeordnet ist, so dass es dem Blatt, das von dem einen Blatttransportelement (24a, 24b) transportiert worden ist, zugewandt ist und einen Informationslesebereich einschließlich eines Informationslesepunkts aufweist, in welchem Lesebereich eine Information von dem einen der Blätter sicher gelesen werden kann,

**dadurch gekennzeichnet, dass**

sich der Blattstützflächenbereich (S) so erstreckt, dass er mit dem einen der Blätter zwischen dem ersten Blatttransportelement (24a, 24b) und dem Informationslesepunkt in Kontakt gebracht werden kann,

das eine Blatttransportelement (24a, 24b) dazu angeordnet ist, das Blatt in Richtung des Blattstützflächenbereichs (S) der Führungsvorrichtung (23) zu überführen, so dass das Blatt den Blattstützflächenbereich (S) stromaufwärts des Informationslesegeräts (122) erreicht, und

eine tangentiale Linie (g) sich, gesehen in einer zur Dickenrichtung des Blatts senkrechten und zur Transportrichtung der Blätter senkrechten Richtung, an einem Grenzpunkt der Transportfläche des ersten Blatttransportelements (24), von welchem Grenzpunkt die Blätter beginnen, sich von der Transportfläche weg zu trennen, zu einem Seitenbereich einer imaginären Geraden erstreckt, die den Informationslesepunkt und den Grenzpunkt passiert, wobei der Seitenbereich den Blattstützflächenbereich einschließt.

2. Vorrichtung nach Anspruch 1, wobei sich der Blattstützflächenbereich so erstreckt, dass er an sich entlang das eine der von dem Blatttransportelement transportierten Blätter in den Informationslesebereich führt.

3. Vorrichtung nach Anspruch 1, wobei die tangentiale Linie (g), in Blickrichtung gesehen, den Blattstützflächenbereich schneidet.

4. Vorrichtung nach Anspruch 1, wobei verhindert wird, dass sich die tangentiale Linie (g) parallel zu der imaginären Geraden erstreckt.

5. Vorrichtung nach irgendeinem der Ansprüche 1 bis 4, weiterhin mit einem ergänzenden Blatttransportelement, das beweglich ist und eine ergänzende Transportfläche aufweist, die mit dem einen der Blätter in Kontakt gebracht werden kann, so dass das eine der Blätter von dem ergänzenden Blatttrarisportelement transportiert wird, wobei sich eine tangentiale Linie eines Grenzpunkts der Transportfläche des Blatttransportelements, von welchem Grenzpunkt das eine der Blätter beginnt, sich von der Transportfläche des Blatttransportelements weg zu trennen, mit einer tangentialen Linie eines Grenzpunkts der ergänzenden Transportfläche des ergänzenden Blatttransportelements schneidet, von welchem Grenzpunkt das eine der Blätter beginnt, sich von der ergänzenden Transportfläche des ergänzenden Blatttransportelements weg zu trennen, wie in einer Blickrichtung senkrecht zu einer Dickenrichtung des einen der Blätter und einer Transportrichtung des einen der von dem Blatttransportelement transportierten Blätter gesehen.

6. Vorrichtung nach irgendeinem der Ansprüche 1 bis 4, weiterhin mit einem ergänzenden Blatttransportelement, das beweglich ist und eine ergänzende Transportfläche aufweist, die mit dem einen der Blätter in Kontakt gebracht werden kann, so dass das eine der Blätter von dem ergänzenden Blatttransportelement transportiert wird, und wobei erste und zweite Blattandrückelemente dem Blatttransportelement und dem ergänzenden Blatttransportelement jeweils auf eine solche Weise gegenüberliegen, dass das eine der Blätter zwischen das Blatttransportelement und das erste Blattandrückelement in einer ersten Andrückrichtung und zwischen das ergänzende Blatttransportelement und das zweite Blattandrückelement in einer zweiten Andrückrichtung gedrückt werden darf, wobei sich die erste und zweite Andrückrichtung, in einer Blickrichtung senkrecht zu einer Dickenrichtung des einen der Blätter und einer Transportrichtung des einen der von dem Blatttransportelement transportierten Blätter gesehen, miteinander schneiden.

7. Vorrichtung nach irgendeinem der Ansprüche 1 bis 4, weiterhin mit einem Blattandrückelement, das dem Blatttransportelement auf einer solche Weise gegenüberliegt, dass das eine der Blätter zwischen das Blatttransportelement und das erste Blattandrückelement an einem Grenzpunkt in einer Andrückrichtung gedrückt werden darf, wobei eine imaginäre Gerade, die den Grenzpunkt in einer Richtung senkrecht zur Andrückrichtung passiert, den Blattstützflächenbereich, in einer Blickrichtung senkrecht zu einer Dickenrichtung des einen der Blätter und einer Transportrichtung des einen der von dem Blatttransportelemente transportierten Blätter gesehen, schneidet.

8. Vorrichtung nach irgendeinem der Ansprüche 1 bis 4, weiterhin mit einem Blattandrückelement (24a, 24b, 25a, 25b, 31), das dem Blatttransportelement auf eine solche Weise gegenüberliegt, dass das eine der Blätter zwischen das

EP 1 492 057 B1

Blatttransportelement und das Blattandrückelement gedrückt werden darf, wobei das Blattandrückelement eine Andrückfläche aufweist, die mit dem einen der Blätter in Kontakt bringbar ist, so dass das eine der Blätter zwischen die Andrück- und Transportflächen gedrückt werden darf, und eine Komprimierungswiderstandsflächensteifigkeit der einen der Andrück- und Transportflächen sich von derjenigen der anderen der Andrück- und Transportflächen auf eine solche Weise unterscheidet, dass sich eine tangentiale Linie eines Grenzpunkts zumindest einer der Andrück- und Transportflächen, von welchem Grenzpunkt das eine der Blätter beginnt, sich von der zumindest einen der Andrück- und Transportflächen weg zu trennen, in den Seitenbereich der imaginären Geraden erstreckt.

9. Vorrichtung nach irgendeinem der Ansprüche 1 bis 8, wobei das Blatttransportelement eine Walze (24a, 24b, 25a, 25b) ist, die auf einer Drehachse gedreht werden kann.

10. Vorrichtung nach irgendeinem der Ansprüche 1 bis 8, wobei das Blatttransportelement ein Riemen (131) ist, der entlang einer ringförmigen Bahn drehbar ist.

11. Vorrichtung nach irgendeinem der Ansprüche 1 bis 10, weiterhin mit einem pneumatischen Gebläse (61) zum Ausüben eines pneumatischen Drucks auf das eine der Blätter auf eine solche Weise, dass das eine der Blätter von dem pneumatischen Druck in Richtung des Blattstützflächenbereichs gedrängt wird.

12. Vorrichtung nach irgendeinem der Ansprüche 1 bis 11, wobei das Informationslesegerät ein Paar Eingabepunkte (122) aufweist, die einander auf eine solche Weise gegenüberliegen, dass die Eingabepunkte jeweiligen Seiten des einen der Blätter in einer Dickenrichtung des einen der Blätter zugewandt sind, um die Information durch die Eingabepunkte zu lesen.

13. Vorrichtung nach irgendeinem der Ansprüche 1 bis 12, wobei, wie in einer Blickrichtung senkrecht zu einer Dickenrichtung des einen der Blätter und einer Transportrichtung des einen der von dem Blatttransportelement transportierten Blätter gesehen, wenn sich der Blattstützflächenbereich gerade und parallel zu einer Stützlinienrichtung erstreckt und den Informationslesebereich passiert, $\alpha$ ein Neigungswinkel zwischen der Stützlinienrichtung und einer tangentialen Linie (g) eines Grenzpunkts der Transportfläche des Blatttransportelements ist, von welchem Grenzpunkt das eine der Blätter beginnt, sich von der Transportfläche weg zu trennen, L ein Abstand zwischen dem Grenzpunkt der Transportfläche des Blatttransportelements und dem Informationslesepunkt in der Stützlinienrichtung ist, h ein Abstand zwischen dem Grenzpunkt der Transportfläche des Blatttransportelements und des Blattstützflächenbereichs in einer Richtung senkrecht zur Stützlinienrichtung ist und $\mu_{pg}$ ein Reibungskoeffizient zwischen dem einen der Blätter und der Transportfläche des Blatttransportelements ist, $\tan^{-1}(h/L) < \alpha < \tan^{-1}(1/\mu_{pg})$ ist.

14. Vorrichtung nach irgendeinem der Ansprüche 1 bis 12, wobei, wie in einer Blickrichtung senkrecht zu einer Dickenrichtung des einen der Blätter und einer Transportrichtung des einen der von dem Blatttransportelement transportierten Blätter gesehen, wenn sich der Blattstützflächenbereich gerade und parallel zu einer Stützlinienrichtung erstreckt und den Informationslesebereich passiert, $\alpha$ ein Neigungswinkel zwischen der Stützlinienrichtung und einer tangentialen Linie (g) eines Grenzpunkts der Transportfläche des Blatttransportelements ist, von welchem Grenzpunkt das eine der Blätter beginnt, sich von der Transportfläche weg zu trennen, L ein Abstand zwischen dem Grenzpunkt der Transportfläche des Blatttransportelements und dem Informationslesepunkt in der Stützlinienrichtung ist, h ein Abstand zwischen dem Grenzpunkt der Transportfläche des Blatttransportelements und des Blattstützflächenbereichs in einer Richtung senkrecht zur Stützlinienrichtung ist, $\mu_{pg}$ ein Reibungskoeffizient zwischen dem einen der Blätter und der Transportfläche des Blatttransportelements ist und J ein Abstand ist in der Richtung senkrecht zur Stützlinienrichtung zwischen dem Grenzpunkt und einem Schnittpunkt zwischen einer imaginären Linie, die den Informationslesepunkt passiert und sich senkrecht zur Stützlinienrichtung erstreckt, und einer imaginären Linie, die den Grenzpunkt der Transportfläche des Blatttransportelements passiert und sich senkrecht zur tangentialen Linie des Grenzpunkts der Transportfläche des Blatttransportelements erstreckt, $J < (L^2/h)$ und $\alpha < \tan^{-1}(1/\mu_{pg})$ ist.

15. Vorrichtung nach irgendeinem der Ansprüche 1 bis 14, weiterhin mit einem ergänzenden Blattstützflächenbereich (26), der dem Blattstützflächenbereich gegenüberliegt, mit dem einen der Blätter in Kontakt bringbar und in Bezug auf den Blattstützflächenbereich auf eine solche Weise bewegbar ist, dass das eine der Blätter, das mit dem ergänzenden Blattstützflächenbereich in Kontakt ist und von dem Blatttransportelement transportiert wird, in eine Richtung zum Blattstützflächenbereich hin gedrängt wird.

16. Vorrichtung nach Anspruch 15, wobei der ergänzende Blattstützflächenbereich (26) dem Informationslesebereich gegenüberliegt, so dass das eine der Blätter, das mit dem ergänzenden Blattstützflächenbereich in Kontakt ist und von dem Blatttransportelement transportiert wird, in eine Richtung zum Blattstützflächenbereich hin gedrängt wird.

17. Vorrichtung nach irgendeinem der Ansprüche 1 bis 15, weiterhin mit einem ergänzenden Blattstützflächenbereich (26), der dem Blattstützflächenbereich gegenüberliegt und mit dem einen der Blätter in Kontakt bringbar ist und sich auf eine solche Weise erstreckt, dass das eine der Blätter, das mit dem ergänzenden Blattstützflächenbereich in Kontakt ist und von dem Blatttransportelement transportiert wird, zum Blattstützflächenbereich hin geführt wird.

18. Vorrichtung nach irgendeinem der Ansprüche 1 bis 12 und 15 bis 17, wobei der Blattstützflächenbereich kurvenförmig ist.

19. Vorrichtung nach irgendeinem der Ansprüche 1 bis 18, weiterhin mit einem Abstandsdetektor (71), der dazu angeordnet ist, einem der Blätter zugewandt zu sein, so dass ein Wert, der sich nach Maßgabe einer Änderung des Abstands zwischen dem einen der Blätter und dem Informationslesegerät ändert, von dem Abstandsdetektor gemessen wird, wobei das Informationslesegerät einen Lichtemitter (121) zum Projizieren eines Lichts auf das eine der Blätter und einen Lichtempfänger (122) zum Empfangen des von dem einen der Blätter reflektierten Lichts beinhaltet, um die Information von dem einen der Blätter zu lesen, und der Lichtemitter nach Maßgabe des Werts auf eine solche Weise gesteuert wird, dass eine Intensität des von dem Lichtemitter emittierten Lichts entsprechend der Vergrößerung des Abstands zwischen dem einen der Blätter und dem Informationslesegerät erhöht wird.

## Revendications

1. Dispositif de manipulation de feuilles de papier (21), comprenant des premier et second éléments de transfert de feuilles de papier (24a, 24b, 25a, 25b, 131) pouvant tourner et ayant une surface de transfert pouvant entrer en contact avec une feuille de papier à transférer de sorte que ladite feuille de papier (21) soit transférée par les éléments de transfert de feuilles de papier, un dispositif de guidage (23) disposé entre les premier et second éléments de transfert de feuilles de papier (24a, 24b, 25a, 25b), ayant une surface de support de feuilles de papier (S) et pouvant entrer en contact avec une feuille de papier transférée par l'un (24a, 24b) des éléments de transfert de feuilles de papier, et

   un lecteur d'informations (122) disposé entre les premier et second éléments de transfert de feuilles de papier (24a, 24b, 25a, 25b) pour faire face à la feuille de papier transférée par ledit élément de transfert de feuilles de papier (24a, 24b) et ayant un champ de lecture d'informations dans lequel des informations peuvent être lues en toute sécurité sur ladite feuille de papier, ledit champ de lecture d'informations incluant un point de lecture d'informations, **caractérisé en ce que**

   la surface de support de feuilles de papier (S) s'étend de manière à pouvoir entrer en contact avec ladite feuille de papier entre le premier élément de transfert de feuilles de papier (24a, 24b) et le point de lecture d'informations, ledit élément de transfert de feuilles de papier (24a, 24b) est disposé pour transférer la feuille de papier vers la surface de support de feuilles de papier (S) du dispositif de guidage (23) de sorte que la feuille de papier atteigne la surface de support de feuilles de papier (S) en amont du lecteur d'informations (122), et

   vue dans un sens perpendiculaire au sens de l'épaisseur de la feuille de papier et perpendiculaire au sens de transfert des feuilles de papier, une ligne tangente (g) au niveau d'un point limite de la surface de transfert du premier élément de transfert de feuilles de papier (24), à partir duquel la feuille de papier commence à se séparer de la surface de transfert, s'étend vers une zone latérale d'une droite imaginaire passant par le point de lecture d'informations et le point limite, ladite zone latérale incluant la surface de support de feuilles de papier.

2. Dispositif selon la revendication 1, dans lequel la surface de support de feuilles de papier s'étend pour guider le long de celle-ci, dans le champ de lecture d'informations, ladite feuille de papier transférée par l'élément de transfert de feuilles de papier.

3. Dispositif selon la revendication 1, dans lequel la ligne tangente (g) croise la surface de support de feuilles de papier, vue dans un sens de visualisation.

4. Dispositif selon la revendication 1, dans lequel la ligne tangente (g) est empêchée de s'étendre parallèlement à la droite imaginaire.

5. Dispositif selon l'une quelconque des revendications 1 à 4, comprenant en outre un élément de transfert de feuilles de papier supplémentaire pouvant se déplacer et ayant une surface de transfert supplémentaire pouvant entrer en contact avec ladite feuille de papier de sorte que ladite feuille de papier soit transférée par l'élément de transfert de feuilles de papier supplémentaire, dans lequel une ligne tangente au niveau d'un point limite de la surface de transfert de l'élément de transfert de feuilles de papier, à partir duquel point limite ladite feuille de papier commence à se séparer de la surface de transfert des éléments de transfert de feuilles de papier, croise une ligne tangente au niveau d'un point limite de la surface de transfert supplémentaire de l'élément de transfert de feuilles de papier supplémentaire, à partir duquel point limite ladite feuille de papier commence à se séparer de la surface de transfert supplémentaire de l'élément de transfert de feuilles de papier supplémentaire, vu dans un sens de visualisation perpendiculaire au sens de l'épaisseur de ladite feuille de papier et au sens de transfert de ladite feuille de papier transférée par l'élément de transfert de feuilles de papier.

6. Dispositif selon l'une quelconque des revendications 1 à 4, comprenant en outre un élément de transfert de feuilles de papier supplémentaire pouvant se déplacer et ayant une surface de transfert supplémentaire pouvant entrer en contact avec ladite feuille de papier de sorte que ladite feuille soit transférée par l'élément de transfert de feuilles de papier supplémentaire, et des premier et second éléments de pressage de feuilles de papier opposés à l'élément de transfert de feuilles de papier et à l'élément de transfert de feuilles de papier supplémentaire respectivement de telle sorte que ladite feuille de papier puisse être pressée entre l'élément de transfert de feuilles de papier et le premier élément de pressage de feuilles de papier dans un premier sens de pressage et entre l'élément de transfert de feuilles de papier supplémentaire et le second élément de pressage de feuilles de papier dans un second sens de pressage, dans lequel les premier et second sens de pressage se croisent, vus dans un sens de visualisation perpendiculaire au sens de l'épaisseur de ladite feuille de papier et au sens de transfert de ladite feuille de papier transférée par l'élément de transfert de feuilles de papier.

7. Dispositif selon l'une quelconque des revendications 1 à 4, comprenant en outre un élément de pressage de feuilles de papier qui est opposé à l'élément de transfert de feuilles de papier de telle sorte que ladite feuille de papier puisse être pressée entre l'élément de transfert de feuilles de papier et l'élément de pressage de feuilles de papier au niveau d'un point limite dans un sens de pressage, dans lequel une droite imaginaire passant par le point limite dans un sens perpendiculaire au sens de pressage croise la surface de support de feuilles de papier, vue dans un sens de visualisation perpendiculaire au sens de l'épaisseur de ladite feuille de papier et au sens de transfert de ladite feuille de papier transférée par l'élément de transfert de feuilles de papier.

8. Dispositif selon l'une quelconque des revendications 1 à 4, comprenant en outre un élément de pressage de feuilles de papier (24a, 24b, 25a, 25b, 131) opposé à l'élément de transfert de feuilles de papier de telle sorte que ladite feuille de papier puisse être pressée entre l'élément de transfert de feuilles de papier et l'élément de pressage de feuilles de papier, dans lequel l'élément de pressage de feuilles de papier possède une surface de pressage pouvant entrer en contact avec ladite feuille de papier de telle sorte que ladite feuille de papier puisse être pressée entre les surfaces de transfert et de pressage, et la rigidité de la surface de résistance à la compression de l'une des surfaces de transfert et de pressage est différente de celle de l'autre des surfaces de transfert et de pressage de telle sorte qu'une ligne tangente au niveau d'un point limite d'au moins l'une des surfaces de transfert et de pressage, à partir duquel point limite ladite feuille commence à se séparer d'au moins l'une des surfaces de transfert et de pressage, s'étend dans la zone latérale de la droite imaginaire.

9. Dispositif selon l'une quelconque des revendications 1 à 8, dans lequel l'élément de transfert de feuilles de papier est un rouleau (24a, 24b, 25a, 25b) pouvant tourner autour d'un axe de rotation.

10. Dispositif selon l'une quelconque des revendications 1 à 8, dans lequel l'élément de transfert de feuilles de papier est une courroie (131) pouvant tourner le long d'une course circulaire.

11. Dispositif selon l'une quelconque des revendications 1 à 10, comprenant en outre un dispositif de soufflage pneumatique (61) permettant d'appliquer une pression pneumatique à ladite feuille de papier de telle sorte que ladite feuille de papier est poussée par la pression pneumatique vers la surface de support de feuilles de papier.

12. Dispositif selon l'une quelconque des revendications 1 à 11, dans lequel le lecteur d'informations possède une paire de points d'entrée (122) opposés l'un à l'autre de telle sorte que les points d'entrée se trouvent face aux côtés respectifs de ladite feuille de papier dans le sens de l'épaisseur de ladite feuille de papier pour lire les informations par l'intermédiaire des points d'entrée.

13. Dispositif selon l'une quelconque des revendications 1 à 12, dans lequel, vu dans un sens de visualisation perpendiculaire au sens de l'épaisseur de ladite feuille de papier et au sens de transfert de ladite feuille de papier transférée par l'élément de transfert de feuilles de papier, quand la surface de support de feuilles de papier s'étend de façon rectiligne parallèlement au sens de la ligne de support et traverse le champ de lecture d'informations, $\alpha$ est un angle d'inclinaison entre le sens de la ligne de support et une ligne tangente (g) au niveau d'un point limite de la surface de transfert de l'élément de transfert de feuilles de papier, à partir duquel point limite ladite feuille de papier commence à se séparer de la surface de transfert, L est une distance entre le point limite de la surface de transfert de l'élément de transfert de feuilles de papier et le point de lecture d'informations dans le sens de la ligne de support, h est une distance entre le point limite de la surface de transfert de l'élément de transfert de feuilles de papier et la surface de support de feuilles de papier dans un sens perpendiculaire au sens de la ligne de support, et $\mu$pg est un coefficient de frottement entre ladite feuille de papier et la surface de transfert de l'élément de transfert de feuilles de papier, $\tan^{-1}(h/L) < \alpha < \tan^{-1}(1/\mu pg)$.

14. Dispositif selon l'une quelconque des revendications 1 à 12, dans lequel, vu dans un sens de visualisation perpendiculaire au sens de l'épaisseur de ladite feuille de papier et au sens de transfert de ladite feuille de papier transférée par l'élément de transfert de feuilles de papier, quand la surface de support de feuilles de papier s'étend de façon rectiligne parallèlement au sens de la ligne de support et traverse le champ de lecture d'informations, $\alpha$ est un angle d'inclinaison entre le sens de la ligne de support et une ligne tangente (g) au niveau d'un point limite de la surface de transfert de l'élément de transfert de feuilles de papier, à partir duquel point limite ladite feuille de papier commence à se séparer de la surface de transfert, L est une distance entre le point limite de la surface de transfert de l'élément de transfert de feuilles de papier et le point de lecture d'informations dans le sens de la ligne de support, h est une distance entre le point limite de la surface de transfert de l'élément de transfert de feuilles de papier et la surface de support de feuilles de papier dans un sens perpendiculaire au sens de la ligne de support, $\mu$pg est un coefficient de frottement entre ladite feuille de papier et la surface de transfert de l'élément de transfert de feuilles de papier, et J est une distance dans le sens perpendiculaire au sens de la ligne de support entre le point limite et un point d'intersection entre une ligne imaginaire passant par le point de lecture d'informations et s'étendant perpendiculairement au sens de la ligne de support et une ligne imaginaire passant par le point limite de la surface de transfert de l'élément de transfert de feuilles de papier et s'étendant perpendiculairement à la ligne tangente au niveau du point limite de la surface de transfert de l'élément de transfert de feuilles de papier, s $J < (L^2/h)$, et $\alpha < \tan^{-1}(1/\mu pg)$.

15. Dispositif selon l'une quelconque des revendications 1 à 14, comprenant en outre une surface de support de feuilles de papier supplémentaire (26) opposée à la surface de support de feuilles de papier, pouvant entrer en contact avec ladite feuille de papier, et pouvant se déplacer par rapport à la surface de support de feuilles de papier de telle sorte que ladite feuille de papier entrant en contact avec la surface de support de feuilles de papier supplémentaire et transférée par l'élément de transfert de feuilles de papier est poussée vers la surface de support de feuilles de papier.

16. Dispositif selon la revendication 15, dans lequel la surface de support de feuilles de papier supplémentaire (26) est opposée au champ de lecture d'informations de sorte que ladite feuille de papier entrant en contact avec la surface de support de feuilles de papier supplémentaire et transférée par l'élément de transfert de feuilles de papier est poussée vers le champ de lecture d'informations.

17. Dispositif selon l'une quelconque des revendications 1 à 15, comprenant en outre une surface de support de feuilles de papier supplémentaire (26) opposée à la surface de support de feuilles de papier et pouvant entrer en contact avec ladite feuille de papier et s'étendant de telle sorte que ladite feuille de papier entrant en contact avec la surface de support de feuilles de papier supplémentaire et transférée par l'élément de transfert de feuilles de papier soit guidée vers la surface de support de feuilles de papier.

18. Dispositif selon l'une quelconque des revendications 1 à 12 et 15 à 17, dans lequel la surface de support de feuilles de papier est incurvée.

19. Dispositif selon l'une quelconque des revendications 1 à 18, comprenant en outre un détecteur de distance (71) disposé de manière à faire face à ladite feuille de papier de sorte qu'une valeur changeant en fonction d'un changement de distance entre ladite feuille de papier et le lecteur d'informations soit mesurée par le détecteur de distance, le lecteur d'informations incluant un émetteur de lumière (121) permettant de projeter une lumière sur ladite feuille de papier et un récepteur de lumière (122) permettant de recevoir la lumière réfléchie par ladite feuille de papier pour lire les informations sur ladite feuille de papier, et l'émetteur de lumière étant contrôlé en fonction de la valeur de telle sorte qu'une intensité de la lumière émise par l'émetteur de lumière est augmentée en fonction de l'augmentation de la distance entre ladite feuille de papier et le lecteur d'informations.

# FIG. 1

# FIG. 2

# FIG. 3

EP 1 492 057 B1

# FIG. 4

# FIG. 6

# FIG. 5

# FIG. 7

# FIG. 8

# FIG. 9

# FIG. 10

EP 1 492 057 B1

# FIG. 11

# FIG. 12

# FIG. 13

**REFERENCES CITED IN THE DESCRIPTION**

**Patent documents cited in the description**

- JP 2000259885 A
- JP 2000090318 A
- EP 0718809 A2
- US 4015703 A